# EUROPEAN PATENT SPECIFICATION

(11) **EP 3 748 762 B1**
(45) Date of publication and mention of the grant of the patent: **14.02.2024**
(21) Application number: 19747811.8
(22) Date of filing: 15.01.2019
(51) Int. Cl.: H01M 10/653, H01M 10/613, H01M 10/617, H01M 10/625, H01M 10/647, H01M 10/651, H01M 10/6554, H01M 10/6555

(54) **THERMAL DIFFUSION SHEET AND BATTERY SYSTEM**
WÄRMEDIFFUSIONSSCHICHT UND BATTERIESYSTEM
FEUILLE DE DIFFUSION THERMIQUE ET SYSTÈME DE BATTERIE

(30) Priority: 30.01.2018 JP 2018013202
(43) Date of publication of application: 09.12.2020
(73) Proprietor: Sekisui Polymatech Co., Ltd., Saitama-city, Saitama 338-0837 (JP)
(72) Inventor: OZAWA Motoki, Saitama-city, Saitama 338-0837 (JP); KOYANO Shigeru, Saitama-city, Saitama 338-0837 (JP)
(74) Representative: Schmid, Wolfgang
(86) International application number: PCT/JP2019/000973
(87) International publication number: WO 2019/150939

(56) References cited:
- EP-A1- 2 492 991
- JP-A- 2009 176 464
- JP-A- 2009 176 464
- JP-A- 2011 231 242
- JP-A- 2012 084 347
- JP-A- 2012 204 129
- US-A1- 2012 315 425
- US-B1- 8 465 864

## Description

### Technical Field

The present invention relates to a battery system formed by arraying multiple battery cells and also to a thermal diffusion sheet to be used for the battery system.

### Background Art

A known battery system, such as a nickel-metal hydride battery or a lithium-ion battery, is used as a power source for an electric vehicle. The known battery system is formed as a battery pack containing a number of battery cells and is characterized by high energy density and space saving. More specifically, in the known battery system, thin laminated battery cells are stacked to form a module. The multiple modules are stacked to form a battery pack. The battery pack also includes other components, such as a control unit and a cooling system.

When the battery system is subjected to a high temperature, the battery system starts to deteriorate. As the deterioration progresses, the battery cells start to expand to cause walls of adjacent battery cells to come into contact with each other, which may lead to breakage of the battery cells due to stress concentration. In order to solve this problem, Japanese Unexamined Patent Application Publication No. 2012-018915 (PTL 1) discloses a technique that a silicone sheet or a graphite sheets is disposed between battery cells to suppress a temperature rise in the battery system.

### Citation List

### Patent Literature

PTL 1: Japanese Unexamined Patent Application Publication No. 2012-018915
PTL 2: Japanese Unexamined Patent Application Publication No. 20009-176464 A
PTL 3: European Patent Application Publication No. EP 2 492 991 A1
PTL 4: US Patent Application Publication No. US 8 465 864 B1
PTL 5: US Patent Application Publication No. US 2012/315425 A1

### Summary of Invention

### Technical Problem

It is more difficult for battery cells located in a central region of the above module to diffuse heat compared with battery cells located in end regions of the module. The battery cells located in the central region also have a portion in which the temperature tends to rise. Such a local high temperature portion accelerates local deterioration, which shortens the life of the entire battery system. However, these problems could not be fully solved by the technique disclosed by Japanese Unexamined Patent Application Publication No. 2012-018915 (PTL 1).

The present invention is made with such circumstances as background. An object of the present invention is to provide a technique with which heat generated locally in a battery cell is diffused effectively.

### Solution to Problem

The present invention provides the configurations for attaining the above object as stated in claim 1. According to an aspect of the present invention, a thermal diffusion sheet that is disposed so as to oppose a battery cell included in a battery system and that diffuses heat generated by the battery cell includes a polymer matrix containing heat conductive filler particles. In the thermal diffusion sheet, the heat conductive filler particles are oriented in a direction parallel to a surface of the battery cell.

In the thermal diffusion sheet according to the present invention, the heat conductive filler particles contained in the polymer matrix are oriented in a direction parallel to the surface of the battery cell. High heat generated locally at a position on the surface of the battery cell is thereby diffused in the direction parallel to the surface of the battery cell. Accordingly, the thermal diffusion sheet of the present invention reduces the likelihood of the battery cell deteriorating locally, which can prolong the life of the entire battery system.

The thermal diffusion sheet according to the present invention is configured such that the surface of the thermal diffusion sheet that opposes the battery cell is a cut surface or a ground surface. According to this configuration, the surface of the thermal diffusion sheet that opposes the battery cell is the cut surface or the ground surface. As a result, the heat conductive filler particles are exposed on the surface of the thermal diffusion sheet that opposes the battery cell. The thermal diffusion sheet of the present invention can conduct heat effectively since the exposed portions of the heat conductive filler particles come into direct contact with the battery cell. Moreover, the thermal diffusion sheet of the present invention exhibits excellent contact with the battery cell since the surface of the thermal diffusion sheet that opposes the battery cell is smoothed by cutting or grinding.

The thermal diffusion sheet may be configured such that the heat conductive filler particles are oriented in a longitudinal direction of the battery cell. According to this configuration, the thermal diffusion sheet can conduct heat generated locally in the battery cell to a low heat generation portion or a non-heat generation portion that are longitudinally distributed in the battery cell. Thus, the thermal diffusion sheet can quickly diffuse the heat generated locally.

The thermal diffusion sheet may be configured such that the heat conductive filler particles are oriented in a lateral direction of the battery cell. According to this configuration, the thermal diffusion sheet can conduct heat to a low heat generation portion or a non-heat generation portion that are laterally distributed in the battery cell and can quickly diffuse the locally generated heat. Moreover, the locally generated heat can be quickly diffused over the entire surface of the battery cell also by combined use of the thermal diffusion sheet in which the heat conductive filler particles are oriented in the longitudinal direction of the battery cell and the thermal diffusion sheet in which the heat conductive filler particles are oriented in the lateral direction of the battery cell.

The thermal diffusion sheet of the present invention may be configured such that the surface of the sheet that opposes the battery cell has a smoothness of 4.0 or less of arithmetic mean roughness Ra. According to this configuration, the thermal diffusion sheet has the smooth surface that opposes the battery cell. Accordingly, the thermal diffusion sheet can follow the surface of the battery cell and come into close contact with the battery cell without an air layer or the like interposed between the thermal diffusion sheet and the battery cell. Accordingly, the thermal diffusion sheet of the present invention can absorb and diffuse heat efficiently.

The thermal diffusion sheet may be configured such that the heat conductive filler particles at least contain any of carbon fiber, scaly graphite powder, graphene, carbon nanotube, and boron nitride. Since the heat conductive filler particles at least contain any of carbon fiber, scaly graphite powder, graphene, carbon nanotube, and boron nitride, the thermal diffusion sheet can have a high heat conductivity. The carbon fiber exhibits a high heat diffusion performance in the longitudinal direction of the carbon fiber particles. Accordingly, if the carbon fiber particles are oriented such that the longitudinal directions of the carbon fiber particles are aligned, for example, parallel to the surface of the thermal diffusion sheet, the thermal diffusion sheet can exhibit a very high heat diffusion performance along the surface thereof.

The thermal diffusion sheet of the present invention may be configured such that the heat conductive filler particles have anisotropic shapes of at least any of fiber-like shapes, plate-like shapes, and scale-like shapes. According to this configuration, the heat conductive filler particles have the anisotropic shape elongated in a specific direction and accordingly can exhibit a high heat diffusion performance in the longitudinal direction thereof. The heat conductive filler particles can have anisotropic shapes of at least any of fiber-like shapes, plate-like shapes, and scale-like shapes. In the case of the heat conductive filler particles having the fiber-like shapes, many elongated heat conductive filler particles can be oriented like threads continuously arranged in the longitudinal direction thereof. In the case of the heat conductive filler particles having the plate-like shapes or the scale-like shapes, the heat conductive filler particles are continuously arranged in the longitudinal direction by laminating particles on each other, which enables the thermal diffusion sheet to exhibit an excellent heat diffusion performance.

The thermal diffusion sheet of the present invention may be configured such that longitudinal side surfaces of the heat conductive filler particles having the anisotropic shapes are exposed on the surface of the thermal diffusion sheet that opposes the battery cell. According to this configuration, the longitudinal side surfaces of the heat conductive filler particles having the anisotropic shapes are brought into direct contact with the battery cell, which enables the thermal diffusion sheet to exhibit a very high heat diffusion performance.

The thermal diffusion sheet of the present invention may be configured such that the hardness of the thermal diffusion sheet is in a range of 10 to 60 measured by a type "OO" durometer in accordance with ASTM D 2240. According to this configuration, the thermal diffusion sheet has a very low hardness, which enables the sheet to readily come into close contact with the surface of the battery cell. The thermal diffusion sheet can absorb the expansion of the battery cell caused by heat, which reduces the likelihood of adjacent battery cells coming into press contact with each other due to the expansion and breaking due to stress concentration.

According to another aspect of the present invention, a battery system includes multiple battery modules each having a battery cell and a thermal diffusion sheet stacked on the battery cell, and the thermal diffusion sheet is the above-described thermal diffusion sheet.

According to this configuration, the battery system constituted by the battery modules having advantageous effects of thermal diffusion sheet of the present invention can be obtained. For example, according to this configuration, the thermal diffusion sheet can diffuse the heat of each battery cell, which can reduce the likelihood of the battery cell causing a local temperature rise and thereby being deteriorated.

According to another aspect of the present invention, a battery system includes battery modules that form a battery pack and each of which has a battery cell and a thermal diffusion sheet stacked on the battery cell. In the battery system, the thermal diffusion sheet is the above-described thermal diffusion sheet.

According to this configuration, the battery system that includes the battery pack formed by the battery modules having advantageous effects of thermal diffusion sheet of the present invention can be obtained. For example, according to this configuration, the thermal diffusion sheet can diffuse the heat of each battery cell, which can reduce the likelihood of the battery cell causing a local temperature rise and thereby being deteriorated.

The battery system may be configured such that the battery cells are stacked on respective upper and lower surfaces of the thermal diffusion sheet, and the upper and lower surfaces of the thermal diffusion sheet absorb and diffuse heat. According to this configuration, the upper and lower surfaces of the thermal diffusion sheet can absorb and diffuse heat.

The battery system may be configured to include a frame plate that is made of a metal or a resin and on which the thermal diffusion sheet having the battery cell stacked thereon is mounted. With this configuration, the frame plate can favorably maintain the stacked state of the battery cell and the thermal diffusion sheet. Moreover, the frame plate is made of a high heat conduction material, such as a metal, which enables the frame plate as well as the thermal diffusion sheet to diffuse heat.

### Advantageous Effects of Invention

Heat of the battery cell can be diffused effectively with the thermal diffusion sheet of the present invention and the battery system utilizing the thermal diffusion sheet. Thus, the life of the battery system can be prolonged.

Even if the battery cells expand due to heat generation, stress concentration can be suppressed between adjacent battery cells with the thermal diffusion sheet of the present invention and the battery system utilizing the thermal diffusion sheet.

### Brief Description of Drawings

[Fig. 1] Fig. 1 is a perspective view schematically illustrating a state in which two battery cells are stacked according to one embodiment of the present invention.
[Fig. 2] Fig. 2 is an exploded perspective view illustrating the battery cells of Fig. 1.
[Fig. 3] Fig. 3 is an exploded perspective view illustrating a battery module formed by combining multiple sets of the battery cells of Fig. 1.
[Fig. 4] Fig. 4 is a schematic perspective view for explanation of a battery pack that forms a battery system according to one embodiment of the present invention.
[Figs. 5] Figs. 5 are enlarged views illustrating examples of a thermal diffusion sheet according to an embodiment.
[Figs. 6] Figs. 6 are diagrams illustrating a thermal conductivity testing apparatus (experimental apparatus). Fig. 6A is a plan view, and Fig. 6B is a cross-sectional view taken along line VIB-VIB in Fig. 6A.

### Description of Embodiments

A thermal diffusion sheet and a battery system that uses the thermal diffusion sheet will be described specifically in accordance with embodiments according to the present invention.

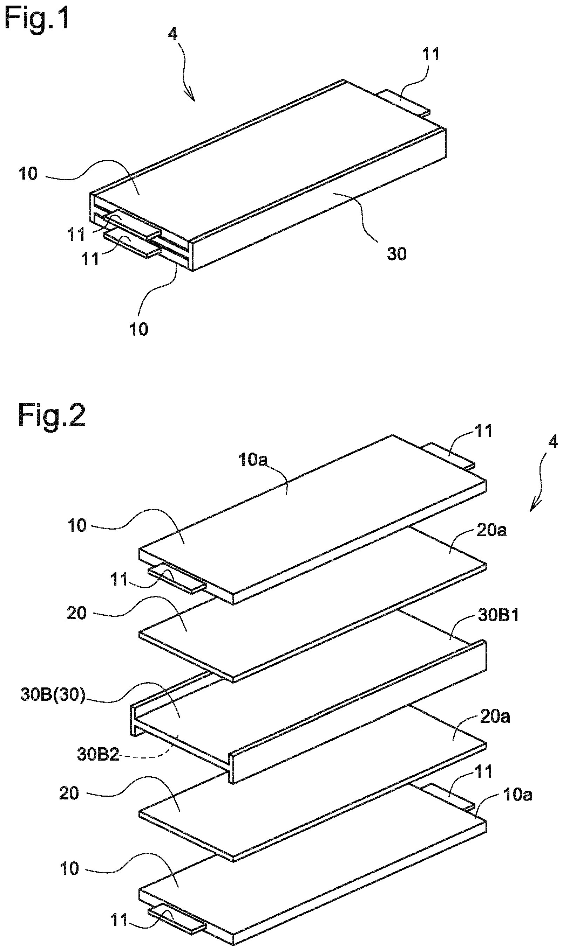

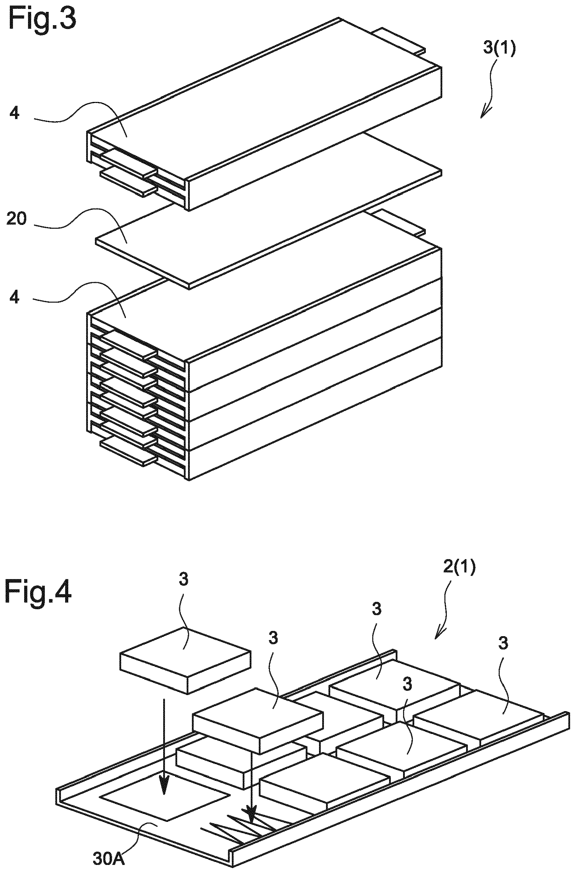

A battery system 1 includes a battery pack 2 (Fig. 4). The battery pack 2 includes multiple battery modules 3 (Fig. 3, Fig. 4), a frame plate 30 (first frame plate 30A), and a control unit and a cooling system and other components (not illustrated). The first frame plate 30a is formed tabularly of a metal, a resin, or a composite material of metal and resin. Multiple battery modules 3 are disposed on the first frame plate 30a. Each battery module 3 includes multiple battery-cell stacks 4 (Fig. 1, Fig. 2, Fig. 3). Each battery-cell stack 4 includes battery cells 10, thermal diffusion sheets 20, and a frame plate 30 (second frame plate 30B).

The battery-cell stack 4 illustrated in Figs. 1 and 2 is formed such that the thermal diffusion sheets 20 and the battery cells 10 are stacked respectively on a first mounting surface 30B1 (the upper surface in the figures) and on a second mounting surface 30B2 (the lower surface in the figures) of the tabularly shaped second frame plate 30B. In addition, as illustrated in Fig. 3, a thermal diffusion sheet 20 is stacked between adjacent ones of the multiple battery-cell stacks 4. These thermal diffusion sheets 20 diffuse heat generated in the battery cells 10 of adjacent battery-cell stacks 4 that oppose each other. Both surfaces of each battery cell 10 are in contact with respective thermal diffusion sheets 20, which can diffuse heat generated at the surfaces. The following describes each portion that constitutes the battery system 1.

Each battery cell 10 is a cell in which a layered body is enclosed and sealed. The layered body is formed by alternately stacking positive electrodes, negative electrodes, and electrolyte sections into multiple layers within a laminated film casing. The laminated film casing is formed by laminating a metal foil, such as an aluminum foil, and a resin film, such as a PET film. Electrodes 11 are exposed at ends of the battery cell 10. The battery cell 10 is shaped like a thin plate.

The thermal diffusion sheet 20 is a member that effectively transfers heat generated in the battery cell 10 to the outside. The thermal diffusion sheet 20 is a sheet-like member formed of a polymer matrix and a heat conductive filler filled in the polymer matrix. Particles of the heat conductive filler are oriented in the polymer matrix in directions parallel to a surface 10a of the battery cell 10. A surface 20a of the thermal diffusion sheet 20 that opposes the battery cell 10 is formed smoothly, for example, as a cut surface or a ground surface.

The polymer matrix has adhesiveness and an ability to stay in a fixed form, which enables the polymer matrix to maintain the shape of the heat conductive filler and to come into contact with the surface of the battery cell 10a. The polymer matrix is preferably one that can maintain the shape of the sheet made thereof while the hardness of the sheet is low in the cured state or in the uncured state. Insofar as the polymer matrix exhibits a good workability while mounting the sheet onto the surface 10a of the battery cell 10, the polymer matrix may be one that maintains the uncured state. However, a curable polymer matrix is preferable if the strength and the handling easiness of the thermal diffusion sheet 20 are improved. Alternatively, the thermal diffusion sheet 20 may be such that only the surface 20a thereof is cured. Curing the surface 20a can improve the strength and the durability of the thermal diffusion sheet 20 while the inside thereof stays in the uncured state and maintains a low hardness. The hardness of the polymer matrix can be adjusted through cross-linking by adding a curing catalyst or a cross-linking agent or can be adjusted through surface treatment of the sheet using, for example, ultraviolet ray irradiation or corona treatment.

The polymer matrix can be made of, for example, silicone-, olefin-, urethane-, acrylic-, or ester-based rubber, gel, or oil. The polymer matrix may include various additives, such as the cross-linking agent or the catalyst, a plasticizer, and a softener.

The heat conductive filler diffuses the heat generated locally in the battery cell 10 over a large area. The heat diffused widely by the heat conductive filler is finally radiated outside. The heat conductive filler may be a carbon-based heat conductive filler (for example, carbon fiber, scaly graphite powder, graphene, carbon nanotube), an inorganic heat conductive filler (for example, an inorganic oxide such as alumina, an inorganic hydroxide such as aluminum hydroxide, or an inorganic nitride such as boron nitride), or a metal-based heat conductive filler (for example, a metal such as aluminum or copper or an alloy containing such metals).

Particles of the heat conductive filler may have various shapes, such as fiber-like shapes, plate-like shapes, scale-like shapes, globular shapes, or polyhedral shapes. The heat conductive filler particles having lengthwise anisotropy in shape, such as fiber-like, plate-like, or scale-like particles, may exhibit a relatively high heat conductivity in the longitudinal direction of the particles. Accordingly, a heat diffusion path that extends in the longitudinal direction of the particles can be formed in the heat conductive filler by uniformly orienting the longitudinal axes of the heat conductive filler particles in the same direction in the polymer matrix. This increases the heat conductivity in a predetermined orientation direction within the polymer matrix. In the case of the heat conductive filler particles having shape isotropy, in other words, having no lengthwise anisotropy, the heat diffusion path can be formed by arranging the particles contiguously so that the path can extend in the contiguous arrangement direction.

In the case of the heat conductive filler particles having anisotropic shapes, such as fiber-like, plate-like, or scale-like shapes, the longitudinal length of a particle may be in a range of 10 to 1000 µm, more preferably in a range of 100 to 500 µm. The content of the heat conductive filler in the polymer matrix is in a range of 5 to 80% in volume. In the case of the heat conductive filler particles having anisotropic shapes, such as fiber-like, plate-like, or scale-like shapes, the content of the heat conductive filler particles in the polymer matrix can be in a range of 5 to 70% in volume.

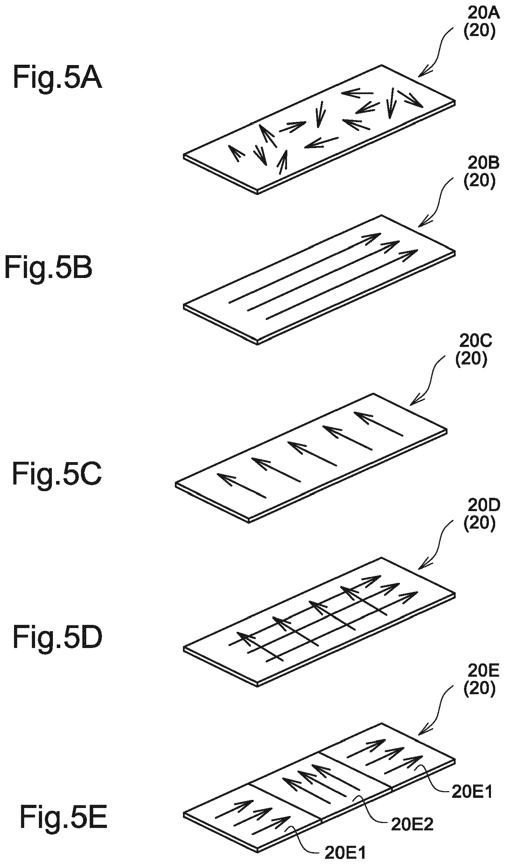

The heat conductive filler particles are oriented in directions parallel to the surface 10a of the battery cell 10. In other words, the heat conductive filler particles are oriented in directions parallel to the surface 20a of the thermal diffusion sheet 20, which orthogonally intersect the thickness direction of the thermal diffusion sheet 20. For example, as illustrated in Fig. 5A, a thermal diffusion sheet 20A has a heat conductive filler of which the particles are oriented in any of the 360-degree directions that orthogonally intersect the thickness direction of the thermal diffusion sheet 20A. Accordingly, in the case of two battery cells 10 being stacked with the thermal diffusion sheet 20A interposed therebetween, the heat generated by one battery cell 10 disposed at one surface of the thermal diffusion sheet 20A can be conducted in directions in which the thermal diffusion sheet 20A extends instead of the heat being conducted to the other battery cell 10 disposed on the other surface of the thermal diffusion sheet 20A. Accordingly, the heat of the entire battery cell 10 can be diffused effectively.

Alternatively, as in a thermal diffusion sheet 20B illustrated in Fig. 5B, the heat conductive filler particles can be oriented in the longitudinal direction of the battery cell 10. The battery cell 10 may have a high heat generation portion, a low heat generation portion, and a non-heat generation portion distributed in the longitudinal direction thereof. Accordingly, the heat generated in the high heat generation portion is conducted in the longitudinal direction of the battery cell 10 to the low heat generation portion or the non-heat generation portion, which enables local heat accumulation to be suppressed and the entire battery cell 10 to diffuse the heat effectively. The heat of the entire battery cell 10 can be also diffused effectively by conducting the heat generated in the low heat generation portion to the non-heat generation portion.

Alternatively, as in a thermal diffusion sheet 20C illustrated in Fig. 5C, the heat conductive filler particles can be oriented in the lateral direction of the battery cell 10. The battery cell 10 may have a high heat generation portion, a low heat generation portion, and a non-heat generation portion distributed in the lateral direction thereof. In this case, the heat generated in the heat generation portions (the high heat generation portion and the low heat generation portion) is conducted in the lateral direction of the battery cell 10 to the low heat generation portion or the non-heat generation portion, which can diffuse the heat effectively.

Alternatively, as in a thermal diffusion sheet 20D illustrated in Fig. 5D, the heat conductive filler particles can be oriented both in the longitudinal direction and in the lateral direction. Accordingly, the heat generated locally in the battery cell 10 is conducted in the longitudinal direction and in the lateral direction that orthogonally intersect the thickness direction of the thermal diffusion sheet 20D, which can thereby cool the battery cell 10 and thereby prevent the battery cell 10 from breaking or deteriorating.

Alternatively, multiple thermal diffusion sheets 20 in which the heat conductive filler particles are oriented in different directions can be arranged on the same flat surface. For example, as in a thermal diffusion sheet 20E illustrated in Fig. 5E, thermal diffusion sheets 20E1 in which the heat conductive filler particles are oriented in the longitudinal direction of the battery cell 10 and a thermal diffusion sheet 20E2 in which the heat conductive filler particles are oriented in the lateral direction thereof may be alternately disposed side by side. This arrangement enables the heat to diffuse quickly not only in the longitudinal direction of the battery cell 10 but also in the lateral direction thereof. Note that although Fig. 5E illustrates an example in which the thermal diffusion sheets are arranged in a row, the thermal diffusion sheets may be arranged in multiple rows and multiple columns in a row and column pattern. In this case, multiple thermal diffusion sheets having different particle-orientation directions may be arranged so as to form a predetermined heat conduction path.

The heat conductive filler particles in the thermal diffusion sheet 20 can be oriented by using a magnetic field, an electric field, fluid flow, shear forces, or the like. Heat conductive filler particles, such as particles of carbon fiber, scaly graphite powder, graphene, carbon nanotube, or boron nitride, have magnetic anisotropy and can be oriented in the direction of the magnetic field or of the electric field.

In the case of using the magnetic field, a magnetic field generated by a magnet, such as a permanent magnet, an electromagnet, or a superconducting electromagnet, is applied to an uncured polymer matrix containing heat conductive filler particles, which thereby orients the heat conductive filler particles along lines of magnetic force. Subsequently, by curing the polymer matrix, the thermal diffusion sheet 20 in which the heat conductive filler particles are oriented in the polymer matrix can be obtained.

In the case of using the electric field, heat conductive filler particles are oriented by placing the uncured polymer matrix containing the heat conductive filler particles in an electric field generated by an electric wire, a superconducting coil, or the like. Subsequently, by curing the polymer matrix, the thermal diffusion sheet 20 in which the heat conductive filler particles are oriented in the polymer matrix can be obtained.

In the case of using fluid flow or shear forces, shape-anisotropic heat conductive filler particles can be oriented due to shear forces applying to the heat conductive filler particles in the flow direction of the polymer matrix by using extrusion molding, injection molding, a doctor blade method, a die coating method, a various-type printing method.

In the case of the heat conductive filler particles being oriented by using the above methods, it is preferable to use a liquid-like polymer matrix and to cure the polymer matrix after the heat conductive filler particles being oriented so that the oriented state can be maintained. It is also preferable that the viscosity of the liquid-like polymer matrix be sufficiently low. It is easier to move the heat conductive filler particles in the low-viscous polymer matrix and to orient the heat conductive filler particles in one direction. Mixing the heat conductive filler particles in the liquid-like polymer matrix increases the viscosity of the mix as the content of the heat conductive filler particles increases. The higher the content of the heat conductive filler particles, the lower the viscosity of the polymer matrix needs to be. Otherwise, it becomes difficult to orient the heat conductive filler particles.

The viscosity of the polymer matrix composite with the heat conductive filler particles being mixed in is preferably in a range of 10 to 300 Pa·s in the case of the magnetic field being used in the orientation. If the viscosity is less than 10 Pa·s, the heat conductive filler particles may settle. If the viscosity exceeds 300 Pa·s, the heat conductive filler particles may not be oriented or the orientation may take too much time due to fluidity being too low. In the case of utilizing a method other than the magnetic field, such as the extrusion molding, the heat conductive filler particles can be oriented even if the viscosity exceeds 300 Pa·s. The viscosity may be lowered to less than 10 Pa·s when heat conductive filler particles do not settle easily or when an additive such as an anti-settling agent is used.

In the case of the magnetic field being used in the orientation, it is more preferable that the viscosity of the polymer matrix composite with the heat conductive filler particles being mixed therein be in a range of 10 to 200 Pa·s. In the case of the heat conductive filler containing large-size particles in a large quantity, if the viscosity exceeds 200 Pa·s, it becomes somewhat difficult to orient the large-size particles. However, if the viscosity is 200 Pa·s or less, it is easy to orient such large-size heat conductive filler particles.

In manufacturing the thermal diffusion sheets 20, in the case of the thermal diffusion sheets 20 being formed from a block-like compact, it is preferable to slice (or cut) the compact into the sheets with a blade in the orientation direction of the heat conductive filler particles. By slicing the compact in this manner, thermal diffusion sheets 20 are made so as to have the heat conductive filler particles oriented along the sheet surface that orthogonally intersects the thickness direction of the sheet. In the case of the thermal diffusion sheet 20 being formed tabularly in advance, it is preferable to slice and remove a surface portion thinly.

It is preferable to smooth the surface 20a of the thermal diffusion sheet 20 that opposes the battery cell 10. The thermal diffusion sheet 20 may have irregularities on the surface 20a. Smoothing the surface 20a can improve contact with the battery cell 10. The smoothing can be performed by cutting the sheet surface with a blade or by grinding the sheet surface with a file, a whetstone, a brush, abrasive paper, cloth, buff, abrasive powder, or the like.

The surface grinding of the thermal diffusion sheet 20 is carried out for the purpose of removing a so-called "skin layer" of the surface of the thermal diffusion sheet 20 and exposing the heat conductive filler particles on the sheet surface. When the polymer matrix containing the heat conductive filler particles is molded into a compact, the surface of the compact forms the skin layer. The skin layer is a surface layer that is made of the polymer matrix and on which the heat conductive filler particles are not exposed. The skin layer prevents the heat conductive filler particles from being exposed from the sheet surface and thereby deteriorates the thermal conductivity. Accordingly, it is preferable that the skin layer be not formed on the contact surface of the thermal diffusion sheet to be in contact with the battery cell 10 and the heat conductive filler particles be exposed on the contact surface.

In the case of the heat conductive filler containing shape-anisotropic filler particles, such as particles of carbon fiber, grinding the thermal diffusion sheet 20 causes the side surfaces of the filler particles to be exposed, which increases the contact area in contact with the battery cell 10 and improves the thermal conductivity of the thermal diffusion sheet 20. In grinding, the polymer matrix is easier to be ground than the heat conductive filler particles. Accordingly, grinding provides a surface on which the heat conductive filler particles slightly protrude from the polymer matrix. As a result, the contact area with the battery cell 10 increases, which improves the thermal conductivity of the thermal diffusion sheet 20. Note that it is preferable to grind the sheet surface in the orientation direction of the heat conductive filler particles in order to prevent the heat conductive filler particles from being detached from the sheet surface due to grinding.

The hardness of the thermal diffusion sheet 20 is preferably in a range of 10 to 60 and more preferably in a range of 20 to 40 when measured by a type "OO" durometer in accordance with ASTM D 2240. If the hardness is lower than 10, the thermal diffusion sheet 20 becomes weak and vulnerable to breakage because of the low hardness and leads to handling difficulty. If the hardness exceeds 60, the thermal diffusion sheet 20 becomes too hard, which deteriorates the adhesion of the sheet to the battery cell 10. If the hardness is in a range of 20 to 40, the thermal diffusion sheet 20 has an appropriate hardness and adheres to the battery cell 10 appropriately. In addition, the battery cell 10 may expand approximately by 10% in the thickness direction due to heat generation. Even if the battery cell 10 expands, the thermal diffusion sheet 20 can absorb the expansion if the hardness of the thermal diffusion sheet 20 is in a range of 10 to 60. Accordingly, the thermal diffusion sheet 20 can suppress the likelihood of the battery cell 10 causing pressure contact, stress concentration, collision, or pressure application against a neighboring battery cell 10.

Multiple thermal diffusion sheets 20 may be disposed on a single battery cell 10. In this case, it is preferable that the thermal diffusion sheets 20 be shaped so as to cover the entire surface of the battery cell 10 and one of the thermal diffusion sheets 20 be brought into direct contact with the battery cell 10. This eliminates a gap between the battery cell 10 and the thermal diffusion sheets 20.

The size of the thermal diffusion sheet 20 is preferably adjusted in accordance with the size of the battery cell 10. However, as an example, the length of the thermal diffusion sheet 20 may be in a range of 30 to 50 cm in the longitudinal direction thereof. The thickness of the thermal diffusion sheet 20 may be in a range of 0.1 to 5 mm, and more preferably in a range of 0.5 to 2 mm. If the thickness is less than 0.1 mm, the thermal diffusion sheet 20 may not exhibit the thermal diffusion performance satisfactorily and may not absorb the expansion of the battery cell 10 sufficiently. If the thickness is more than 5 mm, the thermal diffusion sheet 20 occupies an excess volume with respect to the volume of the battery module 3, which may make size reduction difficult.

It is preferable that the thermal diffusion sheet 20 be brought into direct contact with the surface 10a of the battery cell 10. If an adhesive or the like is used to fix the battery cell 10 and the thermal diffusion sheet 20, the interposed adhesive or the like may impair the thermal conduction. It is preferable to dispose a thermally conductive member, such as a metal plate or a heat sink having a high thermal conductivity, at an end of the thermal diffusion sheet 20 that covers the surface 10a of the battery cell 10. The heat is thereby discharged from the thermal diffusion sheet 20.

### Modification Examples

The above-described embodiment may have different configurations, which will be exemplified below. In the above embodiment, the battery-cell stack 4 is described, by way of example, as including the second frame plate 30B, but the second frame plate 30B may be omitted. The second frame plate 30B is described, by way of example, as having the cross section shaped like letter "I", in other words, having flanges longitudinally extending at sides of the rectangular plate. However, the second frame plate 30B may be shaped like a cylinder, a semicylinder, a flat plate, or the like. Note that by making the second frame plate 30B from a heat conductive metal, the heat conducted from the battery cell 10 to the thermal diffusion sheet 20 can be further conducted to the metal-made second frame plate 30B for discharge.

The battery-cell stack 4 is described, by way of example, as including two battery cells 10. However, the battery-cell stack 4 may include three or more battery cells 10 or may include a single battery cell 10. The position of the thermal diffusion sheet 20 and the number of the thermal diffusion sheets 20 may be changed in accordance with the position of the battery cell 10 and the number of the battery cells 10. In addition, the shape of the second frame plate 30B may be changed in accordance with the position of the battery cell 10 and the thermal diffusion sheet 20 and in accordance with the number of the battery cells 10 and the thermal diffusion sheets 20.

In the above embodiment, a single thermal diffusion sheet 20 is disposed on the surface 10a of the battery cell 10 by way of example. However, multiple thermal diffusion sheets 20 may be stacked on the surface 10a of the battery cell 10. In this case, different thermal diffusion sheets 20 having differently oriented heat conductive filler particles may be used combinedly. For example, the heat conductive filler particles of a first thermal diffusion sheet 20 being in contact with the battery cell 10 may be oriented in the lateral direction of the thermal diffusion sheet 20, whereas the heat conductive filler particles of a second thermal diffusion sheet 20 may be oriented in the longitudinal direction of the thermal diffusion sheet 20.

In the above embodiment, examples of orientation of the heat conductive filler particles are illustrated in Fig. 5. Alternatively, the heat conductive filler particles may be oriented diagonally.

### Example

### Sample Preparation

Sample 1: Sample 1 was prepared by blending, in parts by weight, 100 parts of a liquid silicone A, 10 parts of a liquid silicone B, and 0.5 parts of a curing catalyst for the polymer matrix, and also 750 parts of aluminum powder, 330 parts of carbon fiber, and 5 parts of graphene for the heat conductive filler. As other additives, silicone oil and a silane coupling agent were also added. The liquid polymer composite of Sample 1 was poured in a mold having a predetermined size, and the carbon fiber was oriented, by applying a magnetic field, in an in-plane direction that orthogonally intersects the sheet thickness direction. Subsequently, the polymer matrix was cross-linked and cured to obtain a thermal diffusion block. The block was sliced into sheets in the orientation direction of the carbon fiber particles, and 1 mm thick thermal diffusion sheets were obtained. One of the 1 mm thick thermal diffusion sheet is Sample 1. The carbon fiber particles of the thermal diffusion sheets for Sample 1 are oriented in one direction parallel to the surface of each thermal diffusion sheet.

Samples 2 to 5: the thermal diffusion sheets of Samples 2 to 5 were obtained by grinding sliced surfaces of the thermal diffusion sheets for Sample 1 in accordance with the following conditions. Grinding was carried out by using an abrasive paper made of a PET film coated with aluminum oxide particles having a particle size of 9 µm (mesh number of 2000). Sample 2 was obtained by grinding the sliced surface with the abrasive paper once in both ways (forward and backward) in the orientation direction of the carbon fiber particles. Sample 3 was obtained by grinding the sliced surface with the same abrasive paper three times in both ways in the orientation direction of the carbon fiber particles. Sample 4 was obtained by grinding the sliced surface with the same abrasive paper five times in both ways in the orientation direction of the carbon fiber particles. Sample 5 was obtained by grinding the sliced surface with the same abrasive paper three times in both ways in a direction orthogonally intersecting the orientation direction of the carbon fiber particles.

Sample 6: Sample 6 was prepared by blending, in parts by weight, 100 parts of the liquid silicone A, 10 parts of the liquid silicone B, and 0.5 parts of the curing catalyst for the polymer matrix, and also 400 parts of aluminum hydroxide powder for the heat conductive filler. The liquid polymer composite of Sample 6 was molded in the manner similar to the preparation of Sample 1 to obtain a 1 mm thick thermal diffusion sheet. This sheet is Sample 6.

Sample 7: Sample 7 was made by using the same liquid polymer composite as used in Sample 1. A 1 mm thick thermal diffusion sheet was injection molded by injecting the liquid polymer composite into one end of a tabularly shaped mold. This sheet is Sample 7. In the thermal diffusion sheet of Sample 7, the heat conductive filler particles are oriented in one direction along the surface of the sheet due to the material flow in the mold. In Sample 7, the skin layer made of the polymer matrix is present on the surface of the thermal diffusion sheet, on which the heat conductive filler particles are not exposed.

### Heat Conduction Test

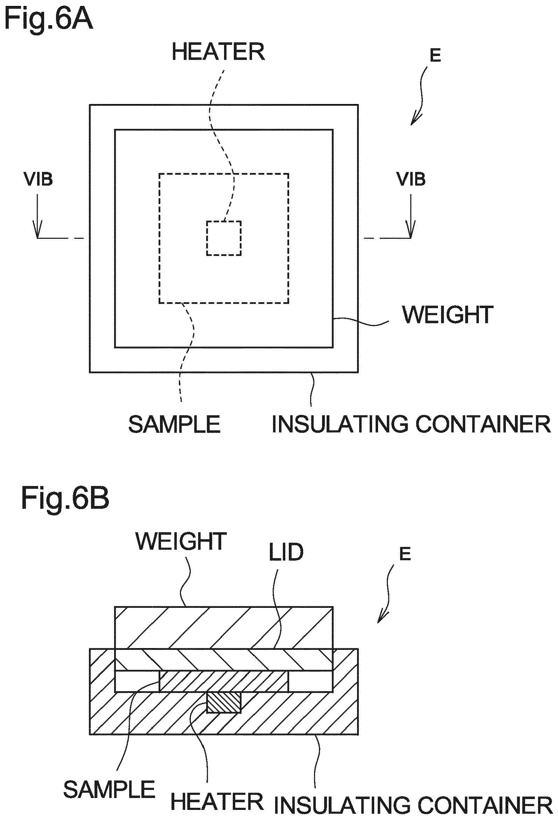

Heat conduction test was carried out using the thermal diffusion sheets of Samples 1 to 7, which were heated using an experimental apparatus described below. The thermal diffusion sheets of Samples 1 to 7 were formed into a size of 50 mm by 50 mm with a thickness of 1 mm. As illustrated in Figs. 6, an experimental apparatus E has an insulating box container made of a heat-insulating material and a 10-mm-diameter heater (thermocouple) as a heat source disposed at the bottom of the insulating box container. The heater was heated to 50°C by applying a voltage of 3V. The upper surface of the heater was covered with each of the samples prepared, and a lid of the insulating box container and a weight of 200 g were placed on the sample (a load of 8 gf/cm² was applied to the sample), thereby enclosing the sample in the container and bringing the sample into close contact with the heater. The temperature of the heater was measured 30 minutes after. Samples 1 to 7 were tested in the same manner, while as a comparative example, only the weight was placed on the lid without placing the sample on the heater, and the temperature of the heater was measured.

As results of the experiment, while the heater temperature was 54°C for the case without placing the sample on the heater, the heater temperature was 39.4°C for Sample 1, 38.8°C for Sample 2, 38.6°C for Sample 3, 38.2°C for Sample 4, 38.0°C for Sample 5, and 45.8°C for Sample 6. In other words, the heater temperature can be lowered by approximately 15°C for Samples 1 to 5. By observing the upper surface of each sheet of Samples 1 to 5 using thermography, it was found that heat spread uniformly in the orientation direction of the carbon fiber particles and that the heat of the high heat portion was diffused and the entire sheet was cooled. In contrast, the temperature dropped only by 8°C for Sample 6. By observing the upper surface of sheet of Sample 6 using thermography, it was found that the high heat portion was concentrated in the size of the heater without spreading widely.

Sample 7 was tested in the same manner. The heater temperature dropped to 41.5°C for Sample 7. In other words, the heater temperature was able to be decreased by approximately 12°C. By observing the upper surface of Sample 7 using thermography, it was found that heat spread uniformly in the orientation direction of the carbon fiber particles. Sample 7 took some more time to become cool compared with Samples 1 to 5. The reason seems to be that the skin layer of the polymer matrix is present and the heat conductive filler particles are not exposed on the surface of Sample 7.

The above results show that a favorable heat conduction performance is obtained for Samples 1 to 5 in which the sliced surface (cut surface) or the ground surface is exposed and the fiber-like heat conductive filler particles are oriented in one direction on the surface.

The embodiments described above are examples for clarifying the present invention. The embodiments may be altered or known techniques may be added to or combined with the embodiments.

### Reference Signs List

- 1: battery system
- 2: battery pack
- 3: battery module
- 4: battery-cell stack
- 10: battery cell
- 10a: surface
- 11: electrode
- 20, 20A to 20E: thermal diffusion sheet
- 20a: surface
- 30: frame plate
- 30A: first frame plate
- 30B: second frame plate
- 30B1: first mounting surface
- 30B2: second mounting surface
- E: experimental apparatus

## Claims

1. A thermal diffusion sheet that is disposed so as to oppose a battery cell included in a battery system and that diffuses heat generated by the battery cell, the thermal diffusion sheet comprising:
a polymer matrix containing heat conductive filler particles, wherein
the heat conductive filler particles are oriented in a direction parallel to a surface of the battery cell, wherein
a surface of the thermal diffusion sheet that opposes the battery cell is a cut surface or a ground surface, and the heat conductive filler particles are exposed on a surface of the thermal diffusion sheet that opposes the battery cell.

2. The thermal diffusion sheet according to Claim 1, wherein
the heat conductive filler particles are oriented in a longitudinal direction of the battery cell.

3. The thermal diffusion sheet according to Claim 1 or 2, wherein
the heat conductive filler particles is oriented in a lateral direction of the battery cell.

4. The thermal diffusion sheet according to any one of Claims 1 to 3, wherein
the surface of the thermal diffusion sheet that opposes the battery cell has a smoothness of 4.0 or less of arithmetic mean roughness Ra.

5. The thermal diffusion sheet according to any one of Claims 1 to 4, wherein
the heat conductive filler particles at least contain any of carbon fiber, scaly graphite powder, graphene, carbon nanotube, and boron nitride.

6. The thermal diffusion sheet according to any one of Claims 1 to 5, wherein
the heat conductive filler particles have anisotropic shapes of at least any of fiber-like shapes, plate-like shapes, and scale-like shapes.

7. The thermal diffusion sheet according to Claim 5 or 6, wherein
longitudinal side surfaces of the heat conductive filler particles having the anisotropic shapes are exposed on the surface of the thermal diffusion sheet that opposes the battery cell.

8. The thermal diffusion sheet according to any one of Claims 1 to 7, wherein a hardness of the thermal diffusion sheet is in a range of 10 to 60 measured by a type "OO" durometer in accordance with ASTM D 2240.

9. A battery system comprising:
multiple battery modules each having a battery cell and a thermal diffusion sheet stacked on the battery cell, wherein
the thermal diffusion sheet is the thermal diffusion sheet according to any one of Claims 1 to 8.

10. A battery system comprising:
battery modules that form a battery pack and each of which has a battery cell and a thermal diffusion sheet stacked on the battery cell, wherein
the thermal diffusion sheet is the thermal diffusion sheet according to any one of Claims 1 to 8.

11. The battery system according to Claim 9 or 10, wherein
the battery cells are stacked on respective upper and lower surfaces of the thermal diffusion sheet, and the upper and lower surfaces of the thermal diffusion sheet absorb and diffuse heat.

12. The battery system according to any one of Claims 9 to 11, further comprising:
a frame plate that is made of a metal or a resin and on which the thermal diffusion sheet with the battery cell being stacked thereon is mounted.

## Patentansprüche

1. Thermische Diffusionsfolie, die so angeordnet ist, dass sie einer in einem Batteriesystem enthaltenen Batteriezelle gegenüberliegt, und die von der Batteriezelle erzeugte Wärme diffundiert, wobei die thermische Diffusionsfolie Folgendes aufweist:
eine Polymermatrix, die wärmeleitende Füllstoffpartikel enthält, wobei
die wärmeleitenden Füllstoffpartikel in einer Richtung parallel zu einer Oberfläche der Batteriezelle ausgerichtet sind, wobei
eine Oberfläche der thermischen Diffusionsfolie, die der Batteriezelle gegenüberliegt, eine geschnittene Fläche oder eine geschliffene Fläche ist, und wobei die wärmeleitenden Füllstoffpartikel auf einer Oberfläche der thermischen Diffusionsfolie, die der Batteriezelle gegenüberliegt, freiliegen.

2. Thermische Diffusionsfolie nach Anspruch 1, wobei
die wärmeleitenden Füllstoffpartikel in einer Längsrichtung der Batteriezelle ausgerichtet sind.

3. Thermische Diffusionsfolie nach Anspruch 1 oder 2, wobei
die wärmeleitenden Füllstoffpartikel in einer Querrichtung der Batteriezelle ausgerichtet sind.

4. Thermische Diffusionsfolie nach einem der Ansprüche 1 bis 3, wobei
die Oberfläche der thermischen Diffusionsfolie, die der Batteriezelle gegenüberliegt, eine Glätte von 4,0 oder weniger des Mittenrauwerts Ra aufweist.

5. Thermische Diffusionsfolie nach einem der Ansprüche 1 bis 4, wobei
die wärmeleitenden Füllstoffpartikel mindestens eine Kohlenstofffaser, schuppiges Graphitpulver, Graphen, Kohlenstoffnanoröhrchen oder Bornitrid enthalten.

6. Thermische Diffusionsfolie nach einem der Ansprüche 1 bis 5, wobei
die wärmeleitenden Füllstoffpartikel anisotrope Formen von mindestens einer der folgenden Formen aufweisen: faserartige Formen, plattenartige Formen und schuppenartige Formen.

7. Thermische Diffusionsfolie nach Anspruch 5 oder 6, wobei
Längsseitenflächen der wärmeleitenden Füllstoffpartikel mit den anisotropen Formen auf der Oberfläche der thermischen Diffusionsfolie, die der Batteriezelle gegenüberliegt, freiliegen.

8. Thermische Diffusionsfolie nach einem der Ansprüche 1 bis 7, wobei die Härte der thermischen Diffusionsfolie in einem Bereich von 10 bis 60 liegt, gemessen mit einem Durometer vom Typ "OO" gemäß ASTM D 2240.

9. Batteriesystem, das Folgendes aufweist:
mehrere Batteriemodule, die jeweils eine Batteriezelle und eine thermische Diffusionsfolie aufweisen, die auf die Batteriezelle gestapelt ist, wobei
die thermische Diffusionsfolie die thermische Diffusionsfolie nach einem der Ansprüche 1 bis 8 ist.

10. Batteriesystem, das Folgendes aufweist:
Batteriemodule, die ein Batteriepaket bilden und von denen jedes eine Batteriezelle und eine auf die Batteriezelle gestapelte thermische Diffusionsfolie aufweist, wobei
die thermische Diffusionsfolie die thermische Diffusionsfolie nach einem der Ansprüche 1 bis 8 ist.

11. Batteriesystem nach Anspruch 9 oder 10, wobei
die Batteriezellen auf der oberen bzw. der unteren Fläche der thermischen Diffusionsfolie gestapelt sind und die obere und die untere Fläche der thermischen Diffusionsfolie Wärme absorbieren und weiterleiten.

12. Batteriesystem nach einem der Ansprüche 9 bis 11, welches des Weiteren Folgendes aufweist:
eine Rahmenplatte, die aus einem Metall oder einem Harz hergestellt ist und auf der die thermische Diffusionsfolie mit der darauf gestapelten Batteriezelle angebracht ist.

## Revendications

1. Feuille de diffusion thermique qui est disposée de manière à s'opposer à une cellule de batterie incluse dans un système de batterie et qui diffuse la chaleur générée par la cellule de batterie, la feuille de diffusion thermique comprenant :
une matrice polymère contenant des particules de charge conductrices de chaleur, dans laquelle
les particules de charge conductrices de chaleur sont orientées dans une direction parallèle à une surface de la cellule de batterie, dans laquelle
une surface de la feuille de diffusion thermique opposée à la cellule de batterie est une surface coupée ou une surface meulée, et les particules de charge conductrices de chaleur sont exposées sur une surface de la feuille de diffusion thermique opposée à la cellule de batterie.

2. Feuille de diffusion thermique selon la revendication 1, dans laquelle
les particules de charge conductrices de chaleur sont orientées dans une direction longitudinale de la cellule de batterie.

3. Feuille de diffusion thermique selon la revendication 1 ou 2,
dans laquelle
les particules de charge conductrices de chaleur sont orientées dans une direction latérale de la cellule de batterie.

4. Feuille de diffusion thermique selon l'une quelconque des revendications 1 à 3, dans laquelle
la surface de la feuille de diffusion thermique opposée à la cellule de batterie présente un poli égal ou inférieur à 4.0 de rugosité moyenne arithmétique Ra.

5. Feuille de diffusion thermique selon l'une quelconque des revendications 1 à 4, dans laquelle
les particules de charge conductrices de chaleur contiennent au moins de la fibre de carbone, de la poudre de graphite squameuse, du graphène, du nanotube de carbone et du nitrure de bore.

6. Feuille de diffusion thermique selon l'une quelconque des revendications 1 à 5, dans laquelle
les particules de charge conductrices de chaleur ont des formes anisotropes d'au moins l'une quelconque des formes semblables à des fibres, des formes semblables à des plaques, et des formes semblables à des écailles.

7. Feuille de diffusion thermique selon la revendication 5 ou 6,
dans laquelle
les surfaces latérales longitudinales des particules de charge conductrices de chaleur ayant les formes anisotropes sont exposées sur la surface de la feuille de diffusion thermique qui s'oppose à la cellule de batterie.

8. Feuille de diffusion thermique selon l'une quelconque des revendications 1 à 7, dans laquelle la dureté de la feuille de diffusion thermique est comprise dans une plage de 10 à 60 mesurée par un duromètre de type "OO" conformément à la norme ASTM D 2240.

9. Système de batterie comprenant :
de multiples modules de batterie ayant chacun une cellule de batterie et une feuille de diffusion thermique empilée sur la cellule de batterie, dans lequel
la feuille de diffusion thermique est la feuille de diffusion thermique selon l'une quelconque des revendications 1 à 8.

10. Système de batterie comprenant :
des modules de batterie qui forment un bloc de batterie et dont chacun possède une cellule de batterie et une feuille de diffusion thermique empilée sur la cellule de batterie, dans lequel
la feuille de diffusion thermique est la feuille de diffusion thermique selon l'une quelconque des revendications 1 à 8.

11. Système de batterie selon la revendication 9 ou 10, dans lequel
les cellules de batterie sont empilées sur les surfaces supérieure et inférieure respectives de la feuille de diffusion thermique, et les surfaces supérieure et inférieure de la feuille de diffusion thermique absorbent et diffusent la chaleur.

12. Système de batterie selon l'une quelconque des revendications 9 à 11, comprenant en outre :
une plaque de cadre qui est constituée d'un métal ou d'une résine et sur laquelle est montée la feuille de diffusion thermique sur laquelle est empilée la cellule de batterie.
